# FASCICULE DE BREVET EUROPEEN

(11) **EP 3 158 180 B1**
(45) Date de publication et mention de la délivrance du brevet: **04.07.2018**
(21) Numéro de dépôt: 15732787.5
(22) Date de dépôt: 22.05.2015
(51) Int. Cl.: F02D 41/14, F02D 41/10, F02D 41/40, F01P 7/16, F02D 33/02, F02D 23/02

(54) **PROCÉDÉ DE PILOTAGE D'UN MOTEUR À COMBUSTION INTERNE**
VERFAHREN ZUR STEUERUNG EINER BRENNKRAFTMASCHINE
METHOD OF CONTROLLING AN INTERNAL COMBUSTION ENGINE

(30) Priorité: 20.06.2014 FR 1455724
(43) Date de publication de la demande: 26.04.2017
(73) Titulaire: Renault S.A.S., 92100 Boulogne-Billancourt (FR)
(72) Inventeur: PETILLON, Yohann, F-78180 Montigny le Bretonneux (FR)
(86) Numéro de dépôt international: PCT/FR2015/051364
(87) Numéro de publication internationale: WO 2015/193572

(56) Documents cités:
- WO-A1-99/15769
- WO-A1-03/102394
- DE-A1-102012 211 527
- US-A- 5 103 791

## Description

La présente invention concerne de manière générale le domaine des moteurs à combustion interne.

Elle concerne plus particulièrement un procédé de pilotage d'un moteur à combustion interne dans lequel,
- à un premier point de fonctionnement du moteur à combustion interne, on acquiert la valeur d'un paramètre caractéristique dudit point de fonctionnement, et on en déduit une première consigne de température de liquide de refroidissement dans le moteur à combustion interne et une première consigne de richesse du mélange d'air et de carburant à admettre dans le moteur à combustion interne,
- lors d'un passage à un second point de fonctionnement différent du premier point de fonctionnement, on acquiert la valeur dudit paramètre et on en déduit des secondes consignes de température et de richesse.

Elle concerne également un moteur à combustion interne comportant un bloc-moteur, une ligne d'admission d'air frais dans le bloc-moteur équipée d'une vanne de régulation du débit d'air frais, une ligne d'échappement des gaz brûlés hors du bloc-moteur, une ligne d'injection de carburant dans le bloc-moteur équipée d'au moins un injecteur de carburant dans le bloc-moteur, et un circuit de refroidissement du bloc-moteur équipé d'un thermostat.

Elle concerne en particulier les moteurs à allumage commandé.

### ARRIERE-PLAN TECHNOLOGIQUE

Lorsqu'un conducteur appuie sur la pédale d'accélérateur, le moteur à combustion interne est piloté de manière à changer de point de fonctionnement.

Le calculateur de ce moteur à combustion interne calcule à cet effet de nouvelles quantités d'air et de carburant à injecter dans les cylindres du moteur.

Le bon fonctionnement de ce moteur impose de ne pas dépasser certaines limites thermomécaniques, telles qu'un seuil de vitesse de rotation de l'arbre moteur ou un seuil de température admissible du bloc-moteur.

Or, lorsqu'un moteur à combustion interne passe d'un point de fonctionnement à un autre, suite à une accélération du conducteur, on constate une élévation de la température des gaz brûlés.

Il est alors nécessaire de limiter cette élévation de température pour éviter une surchauffe du moteur. Le document US5103791A divulgue un pilotage d'un moteur à combustion interne dans lequel, à un premier point de fonctionnement du moteur, on acquiert la valeur d'un paramètre caractéristique dudit point de fonctionnement, et on en déduit une première consigne de richesse du mélange d'air et de carburant. Lors d'un passage à un second point de fonctionnement, on acquiert la valeur dudit paramètre, on en déduit une seconde consigne de richesse, et on calcule un surplus de richesse en fonction d'une température des gaz brûlés acquise. On connaît du document EP1320669 un procédé selon lequel il est prévu de piloter la température de liquide de refroidissement du moteur à combustion interne en fonction du nouveau point de fonctionnement de ce moteur.

Il est notamment prévu de réduire la température de liquide de refroidissement lorsque le moteur fonctionne à forte charge.

Néanmoins, la température de liquide de refroidissement du moteur ne varie pas instantanément avec la nouvelle consigne de température imposée. Le refroidissement du bloc-moteur présente lui-même un certain temps de latence. Ces deux phénomènes combinés ont pour conséquence un risque d'augmentation temporaire de la température du bloc-moteur au-delà du seuil de température admissible.

### OBJET DE L'INVENTION

Afin de remédier à l'inconvénient précité de l'état de la technique, la présente invention propose de piloter astucieusement la température de liquide de refroidissement et la quantité de carburant injecté dans les cylindres du bloc-moteur de manière à limiter les variations de température de ce bloc-moteur.

Plus particulièrement, on propose selon l'invention un procédé de pilotage d'un moteur à combustion interne tel que défini en introduction, dans lequel, si la seconde consigne de température est inférieure strictement à la première consigne de température, il est prévu des étapes de :
a) détermination d'un surplus de richesse à ajouter à la seconde consigne de richesse,
b) acquisition de la température des gaz brûlés, et
c) réduction progressive du surplus de richesse en fonction de la température des gaz brûlés acquise.

Les étapes a) à c) sont mises en oeuvre si la consigne de température de liquide de refroidissement baisse, c'est-à-dire s'il y a un risque que la température du bloc-moteur dépasse le seuil admissible.

Grâce à l'invention, le surplus de richesse en carburant injecté à l'étape a) dans les cylindres a pour effet de bloquer rapidement l'élévation de température des gaz brûlés.

Il a pour conséquence une plus grande consommation de carburant. C'est la raison pour laquelle ce surplus est progressivement réduit à l'étape c) pendant la durée qui est nécessaire pour abaisser la température de liquide de refroidissement jusqu'à sa consigne.

De cette manière, l'élévation de température du bloc-moteur est limitée et la consommation en carburant est réduite.

D'autres caractéristiques non limitatives et avantageuses du procédé de pilotage conforme à l'invention sont les suivantes :
- à l'étape c), la valeur du surplus de richesse réduit est lue dans une cartographie en fonction de la température des gaz brûlés ;
- à l'étape c), la valeur du surplus de richesse réduit est calculée à l'aide d'un régulateur en fonction de la température des gaz brûlés ;
- le régulateur est un régulateur proportionnel, intégral et dérivé ;
- chaque consigne de température de liquide de refroidissement est lue dans une cartographie prédéterminée ;
- chaque consigne de température de liquide de refroidissement est choisie dans un premier échantillon de valeurs distinctes ;
- le premier échantillon comporte au plus cinq valeurs distinctes ;
- le premier échantillon comporte trois valeurs distinctes, à savoir 80°C, 90°C et 100°C ;
- lorsque la température extérieure au moteur à combustion interne est supérieure à un seuil prédéterminé, chaque consigne de température de liquide de refroidissement est choisie dans un second échantillon de valeurs, la valeur la plus basse de ce second échantillon étant supérieure à la valeur la plus basse du premier échantillon.

L'invention propose également un moteur à combustion interne tel que défini en introduction et qui comporte un calculateur configuré pour mettre en oeuvre toutes les étapes du procédé de pilotage selon l'invention et à piloter ladite vanne de régulation, chaque injecteur, et ledit thermostat selon les consignes de température de liquide de refroidissement et de richesse, et compte tenu dudit surplus de richesse.

### DESCRIPTION DETAILLEE D'UN EXEMPLE DE RÉALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 est une vue schématique d'un moteur à combustion interne selon l'invention, et
- la figure 2 est un diagramme illustrant les étapes du procédé mis en oeuvre pour piloter le moteur à combustion interne de la figure 1.

Dans la description, les termes « amont » et « aval » seront utilisés suivant le sens de l'écoulement des gaz, depuis le point de prélèvement de l'air frais dans l'atmosphère jusqu'à la sortie des gaz brûlés dans l'atmosphère.

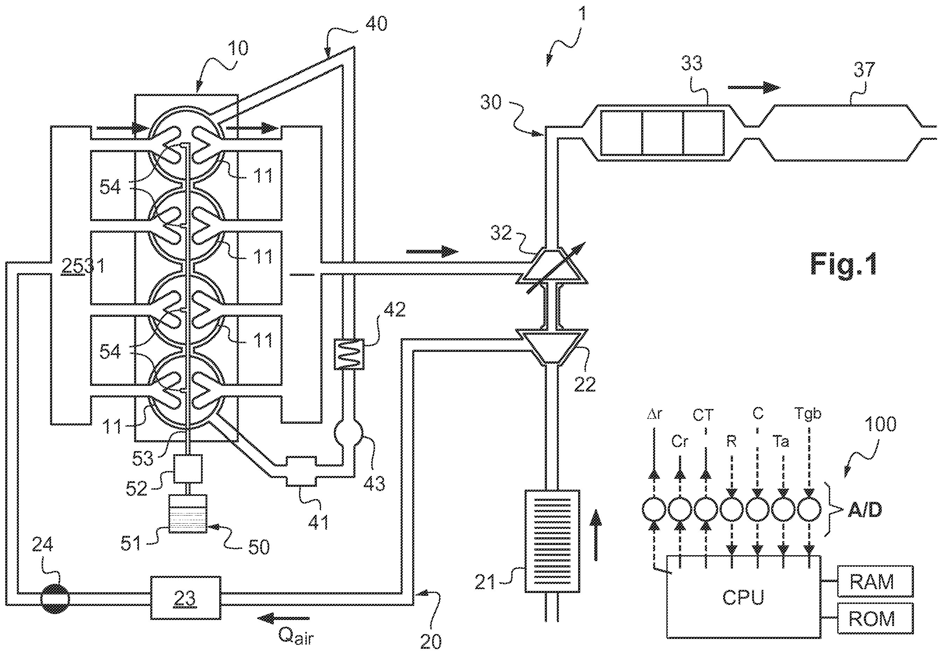

Sur la figure 1, on a représenté schématiquement un moteur à combustion interne 1 de véhicule automobile, qui comprend un bloc-moteur 10 pourvu d'un vilebrequin et de quatre pistons (non représentés) logés dans quatre cylindres 11.

Ce moteur est ici à allumage commandé. Il pourrait également être à allumage par compression.

En amont des cylindres 11, le moteur à combustion interne 1 comporte une ligne d'admission 20 qui prélève l'air frais dans l'atmosphère et qui débouche dans un répartiteur d'air 25 agencé pour répartir l'air frais vers chacun des quatre cylindres 11 du bloc-moteur 10. Cette ligne d'admission 20 comporte, dans le sens d'écoulement de l'air frais, un filtre à air 21 qui filtre l'air frais prélevé dans l'atmosphère, un compresseur 22 qui comprime l'air frais filtré par le filtre à air 21, un refroidisseur d'air principal 23 qui refroidit cet air frais comprimé, et une vanne de régulation 24 du débit d'air frais Qair débouchant dans le répartiteur d'air 25, appelée ci-après « vanne d'admission 24 ».

En sortie des cylindres 11, le moteur à combustion interne 1 comporte une ligne d'échappement 30 qui s'étend depuis un collecteur d'échappement 31 dans lequel débouchent les gaz qui ont été préalablement brûlés dans les cylindres 11, jusqu'à un silencieux d'échappement 37 permettant de détendre les gaz brûlés avant qu'ils ne soient évacués dans l'atmosphère. Elle comporte par ailleurs, dans le sens d'écoulement des gaz brûlés, une turbine 32 et un pot catalytique 33 de traitement des gaz brûlés.

La turbine 32 est entraînée en rotation par le flux de gaz brûlés sortant du collecteur d'échappement 31, et elle permet d'entraîner le compresseur 22 en rotation, grâce à des moyens de couplage mécanique tels qu'un simple arbre de transmission.

Le moteur à combustion interne 1 comporte par ailleurs une ligne d'injection 50 de carburant dans les cylindres 11. Cette ligne d'injection 50 comporte une pompe d'injection 52 agencée pour prélever le carburant dans un réservoir 51 afin de l'amener sous pression dans un rail de distribution 53. Cette ligne d'injection 50 comporte en outre quatre injecteurs 54 dont les entrées communiquent avec le rail de distribution 53 et dont les sorties débouchent respectivement dans les quatre cylindres 11.

Le moteur à combustion interne 1 comporte également un circuit de refroidissement 40 du bloc-moteur 10 qui permet notamment de faire circuler un liquide de refroidissement autour des quatre cylindres 11. Ce circuit de refroidissement 40 comporte au moins un thermostat 41 qui impose une consigne sur la température de liquide de refroidissement, un échangeur thermique 42 entre l'air ambiant et le liquide de refroidissement, communément appelé radiateur 42, et une pompe 43 qui permet de forcer le liquide de refroidissement à circuler dans le circuit de refroidissement 40.

Concernant la circulation des fluides, lorsque le moteur est démarré, l'air frais prélevé dans l'atmosphère par la ligne d'admission 20 est filtré par le filtre à air 21, comprimé par le compresseur 22, refroidi par le refroidisseur d'air principal 23, puis brûlé avec le carburant injecté dans les cylindres 11.

Le liquide de refroidissement est mis en circulation continue dans le circuit de refroidissement 40 par la pompe 43. Ce liquide est refroidi par échange thermique dans le radiateur 42 à une température imposée par le thermostat 41, selon une consigne de température de liquide de refroidissement CTI.

A leur sortie des cylindres 11, les gaz brûlés sont détendus dans la turbine 32, traités et filtrés dans le pot catalytique 33, puis détendus à nouveau dans le silencieux d'échappement 37 avant d'être rejetés dans l'atmosphère.

Pour piloter les différents organes du moteur à combustion interne 1 et notamment les quatre injecteurs 54, le thermostat 41, ainsi que la vanne d'admission 24, il est prévu un calculateur 100 comportant un processeur (CPU), une mémoire vive (RAM), une mémoire morte (ROM), des convertisseurs analogiques-numériques (A/D), et différentes interfaces d'entrée et de sortie.

Grâce à ses interfaces d'entrée, le calculateur 100 est adapté à recevoir de différents capteurs des signaux d'entrée relatifs au fonctionnement du moteur et aux conditions climatiques.

Dans sa mémoire vive, le calculateur 100 mémorise ainsi en continu :
- la charge C instantanée du moteur à combustion interne 1,
- le régime R instantané du moteur à combustion interne 1,
- la température ambiante Ta, c'est-à-dire la température à l'extérieur du véhicule,
- la température des gaz brûlés Tgb, c'est-à-dire, ici, la température dans l'enceinte du collecteur d'échappement 31.

La température ambiante Ta est mesurée à l'aide d'un capteur de température situé à l'embouchure de la ligne d'admission 20, en aval du filtre à air 21.

La température des gaz brûlés Tgb est soit mesurée par un capteur de température, soit calculée, par exemple par approximation via un observateur d'état se basant sur la charge C, le régime R et la température ambiante Ta.

La charge C correspond au rapport du travail fourni par le moteur sur le travail maximal que pourrait développer ce moteur à un régime donné. Elle est généralement approximée à l'aide d'une variable appelée pression moyenne effective PME.

Le régime R correspond à la vitesse de rotation du vilebrequin, exprimée en tours par minute.

On définira ici un point de fonctionnement du moteur par le doublet de valeurs de charge C et de régime R.

En variation, le point de fonctionnement du moteur pourrait être défini en fonction de paramètres supplémentaires (par exemple en fonction de la température des gaz frais) ou en fonction de paramètres différents (par exemple en fonction de la richesse et du débit d'air frais Qair traversant la vanne d'admission 24).

Grâce à un logiciel et une cartographie (prédéterminée sur banc d'essais) mémorisés dans sa mémoire morte, le calculateur 100 est adapté à générer, pour chaque point de fonctionnement du moteur, des signaux de sortie.

Ces signaux de sortie sont notamment une consigne de température de liquide de refroidissement CTI et une consigne de richesse Cr en carburant à injecter dans le moteur.

Enfin, grâce à ses interfaces de sortie, le calculateur 100 est adapté à transmettre ces signaux de sortie aux différents organes du moteur, notamment à la vanne d'admission 24, aux injecteurs 54 et au thermostat 41.

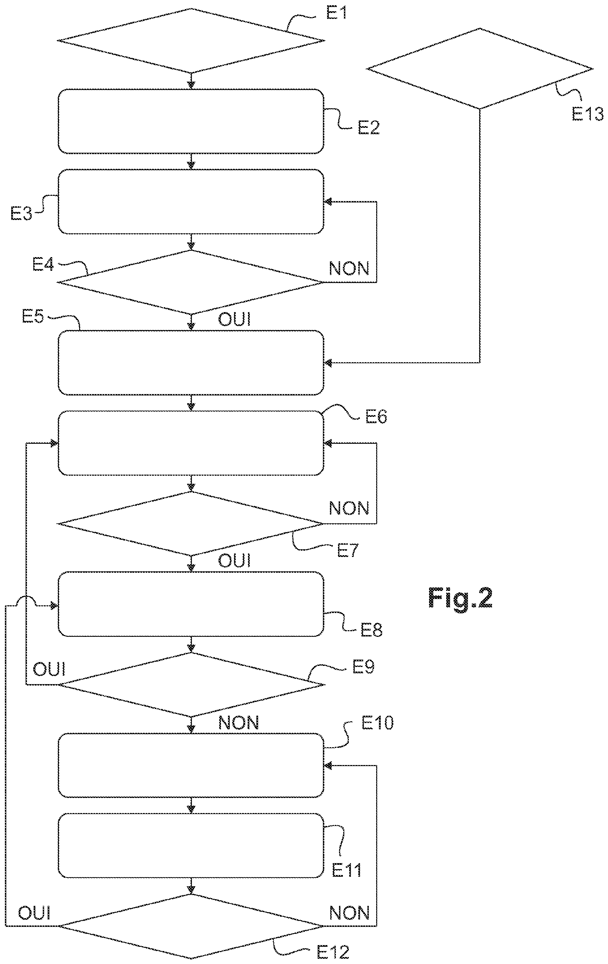

Comme cela est illustré sur la figure 2, lorsque le moteur du véhicule automobile est démarré, afin de le stabiliser à un premier point de fonctionnement (étape E1), le calculateur 100 calcule des premières consignes de température de liquide de refroidissement CTl1 et de richesse Cr1 (étape E2).

Ces consignes, combinées avec les deux paramètres de régime R et de couple C caractérisant le premier point de fonctionnement, permettent de commander le thermostat 41, la vanne d'admission 24 et les injecteurs 54.

Le thermostat 41 est en effet piloté de manière à stabiliser la température du liquide de refroidissement qui le traverse à la valeur de la consigne CTl1 (étape E3).

En pratique, cette consigne CTl1 aura une valeur choisie dans un premier échantillon de trois valeurs distinctes prédéterminées (à savoir 80°C, 90°C et 100°C).

Toutefois, si la température ambiante Ta est supérieure à une température seuil (ici 40°C), la consigne sera choisie dans un second échantillon restreint (comprenant ici seulement les deux valeurs 90°C et 100°C) de manière à ce qu'elle reste atteignable, compte tenu des conditions climatiques et des performances du radiateur 42.

Ici, on considèrera le cas où la première consigne de température de liquide de refroidissement CTl1 est de 100°C.

Pour leur part, les injecteurs 54 et la vanne d'admission 24 sont pilotés de manière à ce que le vilebrequin tourne au régime R et développe un couple correspondant à la charge C souhaitée. La proportion d'air frais admis et du carburant injecté dans les cylindres 11 est prévue pour être égale à la première consigne de richesse Cr1 fixée.

Le calculateur 100 détecte si une action est exercée par le conducteur sur la pédale d'accélérateur (étape E4).

Tant qu'aucune action n'est exercée par le conducteur sur la pédale d'accélérateur, les consignes de pilotage sont maintenues.

En revanche, si par action du conducteur sur la pédale d'accélérateur, le point de fonctionnement à atteindre change, le calculateur 100 calcule de nouveaux signaux de sortie.

On considèrera ici le cas où le conducteur souhaite accélérer jusqu'à un second point de fonctionnement. Les injecteurs 54 sont alors commandés pour introduire davantage de carburant dans les cylindres 11. En parallèle, la vanne d'admission 24 est commandée pour augmenter le débit d'air Qair admis dans ces mêmes cylindres 11.

Pour atteindre ce second point de fonctionnement, le calculateur 100 détermine une seconde consigne de richesse Cr2 et une seconde consigne de température de liquide de refroidissement CTl2 (étape E5), et il commande les injecteurs 54, le thermostat 41 et la vanne d'admission 24 en conséquence (étape E6).

A cette étape E6, le risque est que le changement de point de fonctionnement entraîne une élévation de la température des gaz brûlés Tgb dans le collecteur d'échappement 31, au-delà d'un seuil de température Tseuil admissible. Pour contenir cette élévation de température, la deuxième consigne de température de liquide de refroidissement CTl2 peut être choisie à une valeur inférieure à celle de la première consigne de température de liquide de refroidissement CTl1. Elle peut, par exemple, être choisie égale à 90°C.

On comprend que la température de liquide de refroidissement ne va pas chuter brutalement mais qu'elle va diminuer progressivement, compte tenu des performances du radiateur 42.

En attendant que la température du liquide de refroidissement atteigne sa consigne, pour limiter l'élévation de température des gaz brûlés Tgb, la présente invention propose d'enrichir le mélange injecté dans les cylindres 11, en injectant un surplus de carburant Δr dans les cylindres 11.

Ainsi, selon une caractéristique particulièrement avantageuse de l'invention, il est prévu des étapes de :
- détermination d'un surplus de richesse Δr à ajouter à la seconde consigne de richesse Cr2,
- acquisition de la température des gaz brûlés Tgb, et
- réduction progressive du surplus de richesse Δr en fonction de la température des gaz brûlés Tgb acquise.

Plus précisément, comme le montre la figure 2, le calculateur 100 détermine si la deuxième consigne de température de liquide de refroidissement CTl2 est inférieure à la première consigne de température de liquide de refroidissement CTl1 (étape E7). Si ce n'est pas le cas (ce qui signifie que la consigne de température de liquide de refroidissement CTl ne change pas ou augmente), les organes du moteur restent pilotés suivant la seconde consigne de richesse Cr2 selon l'étape E6.

Au contraire, si la deuxième consigne de température de liquide de refroidissement CTl2 est inférieure à la première consigne de température de liquide de refroidissement CTl1, le calculateur 100 détermine un surplus de richesse Δr en carburant à injecter dans les cylindres 11 du moteur (étape E8).

Ce surplus de richesse Δr pourra être lu dans une cartographie du calculateur, ou pourra être calculé (comme cela sera décrit dans la suite de cet exposé).

Puis le calculateur 100 détermine si le surplus de richesse Δr en carburant déterminé à l'étape E8 est nul (étape E9).

Si le surplus de richesse Δr en carburant déterminé à l'étape E8 est nul, les organes du moteur restent pilotés suivant les secondes consignes de température CTl2 et de richesse Cr2.

Si le surplus de richesse Δr en carburant déterminé à l'étape E8 est non nul, le calculateur 100 commande les injecteurs 54 et la vanne d'admission 24 de telle sorte que la richesse du mélange injecté soit égale à une consigne de richesse Cr équivalente à la somme de la deuxième consigne de richesse Cr2 et du surplus de richesse Δr (étape E10).

La température des gaz brulés Tgb est ensuite acquise (étape E11) par le calculateur 100.

Le calculateur 100 détermine ensuite si la température des gaz brûlés Tgb est inférieure ou égale à un seuil de température Tseuil fixé (étape E12).

Tant que la température des gaz brûlés Tgb reste supérieure à ce seuil de température Tseuil (ce qui signifie qu'il y a un risque de surchauffe du moteur), la richesse Cr du mélange injecté reste égale à la somme de la seconde consigne de richesse Cr2 et du surplus de richesse Δr initial.

En revanche, dès que la température des gaz brûlés diminue et passe sous le seuil de température Tseuil (ce qui signifie que la baisse de température de liquide de refroidissement commence à avoir une influence), on cherche à limiter la consommation en carburant en réduisant la valeur du surplus de richesse Δr.

Pour cela, le calculateur 100 revient à l'étape E8 et recalcule un surplus de richesse Δr.

Ce nouveau surplus de richesse Δr peut être choisi égal au surplus de richesse Δr initial, auquel on retranche une valeur fixe.

Il peut sinon être lu dans une cartographie, en fonction de la température des gaz brûlés Tgb (et éventuellement aussi de la charge C et du régime R).

Il peut encore être calculé au moyen d'un régulateur proportionnel intégral et dérivé PID, dont les constantes auront été prédéterminées sur banc d'essais.

Puis, le calculateur remet en oeuvre les étapes E9 à E12 jusqu'à ce que le surplus de richesse Δr soit nul (cas où le circuit de refroidissement suffit à refroidir le moteur afin que sa température ne dépasse pas la valeur admissible).

Dès que le conducteur agit à nouveau sur la pédale d'accélérateur, il interrompt le processus précité de manière que le moteur atteigne un nouveau point de fonctionnement (étape E13). Dans ce cas, le calculateur 100 revient à l'étape E5 du procédé.

Le procédé prend fin quand le moteur à combustion interne 1 est éteint.

La présente invention n'est nullement limitée au mode de réalisation décrit et représenté, mais l'homme du métier saura y apporter toute variante conforme à son esprit.

Ainsi on pourrait prévoir que la consigne de température de liquide de refroidissement CTl soit choisie dans un premier échantillon comportant plus de trois valeurs (par exemple comportant les valeurs 80°C, 85°C, 90°C, 95°C et 100°C).

Selon une autre variante, à l'étape E7, on aurait pu prévoir que le calculateur 100 compare la nouvelle consigne de température de liquide de refroidissement CTl2 non pas avec l'ancienne consigne de température de liquide de refroidissement CTl1, mais avec la température mesurée du liquide de refroidissement.

## Revendications

1. Procédé de pilotage d'un moteur à combustion interne (1) dans lequel,
- à un premier point de fonctionnement du moteur à combustion interne (1), on acquiert la valeur d'un paramètre caractéristique (R ; C) dudit point de fonctionnement, et on en déduit une première consigne de température de liquide de refroidissement (CTl1) dans le moteur à combustion interne (1) et une première consigne de richesse (Cr1) du mélange d'air et de carburant à admettre dans le moteur à combustion interne (1),
- lors d'un passage à un second point de fonctionnement différent du premier point de fonctionnement, on acquiert la valeur dudit paramètre (R ; C) et on en déduit des secondes consignes de température (CTl2) et de richesse (Cr2), **caractérisé en ce que**, si la seconde consigne de température (CTl2) est inférieure strictement à la première consigne de température (CTl1 ; E7), il est prévu des étapes de :
a) détermination d'un surplus de richesse (Δr) à ajouter à la seconde consigne de richesse (Cr2 ; E8),
b) acquisition de la température des gaz brûlés (Tgb ; E11), et
c) réduction progressive du surplus de richesse (Δr) en fonction de la température des gaz brûlés (Tgb) acquise (E12 ; E8).

2. Procédé de pilotage selon la revendication 1, dans lequel, à l'étape c), la valeur du surplus de richesse (Δr) réduit est lue dans une cartographie en fonction de la température des gaz brûlés (Tgb).

3. Procédé de pilotage selon la revendication 1, dans lequel, à l'étape c), la valeur du surplus de richesse (Δr) réduit est calculée à l'aide d'un régulateur en fonction de la température des gaz brûlés (Tgb).

4. Procédé de pilotage selon la revendication précédente, dans lequel le régulateur est un régulateur proportionnel, intégral et dérivé (PID).

5. Procédé de pilotage selon l'une des revendications précédentes, dans lequel chaque consigne de température de liquide de refroidissement (CTl1 ; CTl2) est lue dans une cartographie prédéterminée.

6. Procédé de pilotage selon l'une des revendications précédentes, dans lequel chaque consigne de température de liquide de refroidissement (CTl1 ; CTl2) est choisie dans un premier échantillon de valeurs distinctes.

7. Procédé de pilotage selon la revendication précédente, dans lequel le premier échantillon comporte au plus cinq valeurs distinctes.

8. Procédé de pilotage selon la revendication précédente, dans lequel le premier échantillon comporte trois valeurs distinctes, à savoir 80°C, 90°C et 100°C.

9. Procédé de pilotage selon l'une des trois revendications précédentes, dans lequel lorsque la température ambiante Ta est supérieure à un seuil prédéterminé, chaque consigne de température de liquide de refroidissement (CTl1 ; CTl2) est choisie dans un second échantillon de valeurs, la valeur la plus basse de ce second échantillon étant supérieure à la valeur la plus basse du premier échantillon.

10. Moteur à combustion interne (1) comportant un bloc-moteur (10), une ligne d'admission (20) d'air frais dans le bloc-moteur (10) équipée d'une vanne de régulation (24) du débit d'air frais dans le bloc-moteur (10), une ligne d'échappement (30) des gaz brûlés hors du bloc-moteur (10), une ligne d'injection (50) de carburant dans le bloc-moteur (10) équipée d'au moins un injecteur (54) de carburant dans le bloc-moteur (10), un circuit de refroidissement (40) du bloc-moteur (10) équipé d'un thermostat (41), **caractérisé en ce qu'**il comporte un calculateur (100) configuré pour mettre en oeuvre toutes les étapes du procédé de pilotage selon l'une des revendications précédentes et à piloter ladite vanne de régulation (24), chaque injecteur (54), et ledit thermostat (41) selon les consignes de température de liquide de refroidissement (CTl2) et de richesse (Cr2), et compte tenu dudit surplus de richesse (Δr).

## Patentansprüche

1. Verfahren zur Steuerung einer Brennkraftmaschine (1), wobei
- an einem ersten Betriebspunkt der Brennkraftmaschine (1) der Wert eines charakteristischen Parameters (R; C) dieses Betriebspunktes erfasst wird und davon ein erster Temperatursollwert der Kühlflüssigkeit (CTl1) in der Brennkraftmaschine (1) und ein erster Sollwert der Anreicherung (Cr1) des in die Brennkraftmaschine (1) einzulassenden Luft-Kraftstoff-Gemischs abgeleitet werden,
- bei einem Übergang zu einem zweiten Betriebspunkt, der von dem ersten Betriebspunkt verschieden ist, der Wert des Parameters (R; C) erfasst wird und davon zweite Sollwerte der Temperatur (CTl2) und der Anreicherung (Cr2) abgeleitet werden,
**dadurch gekennzeichnet, dass**, falls der zweite Temperatursollwert (CTl2) streng kleiner als der erste Temperatursollwert (CTl1; E7) ist, folgende Schritte vorgesehen sind:
a) Bestimmung einer zusätzlichen Anreicherung (Δr), die zu dem zweiten Sollwert der Anreicherung (Cr2; E8) hinzuzufügen ist,
b) Erfassung der Temperatur der Abgase (Tgb; E11), und
c) schrittweise Verringerung der zusätzlichen Anreicherung (Δr) in Abhängigkeit von der Temperatur der Abgase (Tgb), die erfasst wurde (E12; E8).

2. Verfahren zur Steuerung nach Anspruch 1, wobei in Schritt c) der Wert der verringerten zusätzlichen Anreicherung (Δr) aus einem Kennfeld in Abhängigkeit von der Temperatur der Abgase (Tgb) abgelesen wird.

3. Verfahren zur Steuerung nach Anspruch 1, wobei in Schritt c) der Wert der verringerten zusätzlichen Anreicherung (Δr) mithilfe eines Reglers in Abhängigkeit von der Temperatur der Abgase (Tgb) berechnet wird.

4. Verfahren zur Steuerung nach dem vorhergehenden Anspruch, wobei der Regler ein Proportional-Integral-Differential- (PID-) Regler ist.

5. Verfahren zur Steuerung nach einem der vorhergehenden Ansprüche, wobei jeder Temperatursollwert der Kühlflüssigkeit (CTl1; CTl2) aus einem vorbestimmten Kennfeld abgelesen wird.

6. Verfahren zur Steuerung nach einem der vorhergehenden Ansprüche, wobei jeder Temperatursollwert der Kühlflüssigkeit (CTl1; CTl2) aus einem ersten Satz von verschiedenen Werten gewählt ist.

7. Verfahren zur Steuerung nach dem vorhergehenden Anspruch, wobei der erste Satz höchstens fünf verschiedene Werte umfasst.

8. Verfahren zur Steuerung nach dem vorhergehenden Anspruch, wobei der erste Satz drei verschiedene Werte umfasst, nämlich 80 °C, 90 °C und 100 °C.

9. Verfahren zur Steuerung nach einem der drei vorhergehenden Ansprüche, wobei, wenn die Umgebungstemperatur Ta höher als ein vorbestimmter Schwellenwert ist, jeder Temperatursollwert der Kühlflüssigkeit (CTl1; CTl2) aus einem zweiten Satz von Werten gewählt wird, wobei der kleinste Wert dieses zweiten Satzes größer als der kleinste Wert des ersten Satzes ist.

10. Brennkraftmaschine (1), welche einen Motorblock (10), eine Leitung für den Einlass (20) von Frischluft in den Motorblock (10), die mit einem Ventil zur Regelung (24) des Durchflusses von Frischluft in den Motorblock (10) ausgestattet ist, eine Leitung zum Auslassen (30) der Abgase aus dem Motorblock (10), eine Leitung zur Einspritzung (50) von Kraftstoff in den Motorblock (10), die mit wenigstens einer Düse (54) zur Einspritzung von Kraftstoff in den Motorblock (10) ausgestattet ist, und einen Kühlkreislauf (40) des Motorblocks (10), der mit einem Thermostat (41) ausgestattet ist, aufweist, **dadurch gekennzeichnet, dass** sie einen Rechner (100) aufweist, der dafür ausgelegt ist, alle Schritte des Verfahrens zur Steuerung nach einem der vorhergehenden Ansprüche durchzuführen und das Regelventil (24), jede Einspritzdüse (54) und den Thermostat (41) gemäß den Sollwerten der Temperatur der Kühlflüssigkeit (CTl2) und der Anreicherung (Cr2) und unter Berücksichtigung der zusätzlichen Anreicherung (Δr) zu steuern.

## Claims

1. Method for controlling an internal combustion engine (1) wherein
- at a first operating point of the internal combustion engine (1), the value of a first characteristic parameter (R; C) of said operating point is acquired, and from this a first liquid coolant temperature setpoint (CTI1) in the internal combustion engine (1) and a first richness setpoint (Cr1) of the mixture of air and fuel to be admitted into the internal combustion engine (1) are deduced,
- on passing a second operating point different from the first operating point, the value of said parameter (R; C) is acquired and from this, second setpoints for temperature (CTI2) and richness (Cr2) are deduced,
**characterized in that** if the second temperature setpoint (CTI2) is strictly lower than the first temperature setpoint (CTI1; E7), provision is made to perform the following steps:
a) determination of an additional richness (Δr) to be added to the second richness setpoint (Cr2; E8),
b) acquisition of the burned gas temperature (Tgb; E11), and
c) progressive reduction of the additional richness (Δr) as a function of the burned gas temperature (Tgb) acquired (E12; E8).

2. Control method according to Claim 1, wherein in step c), the value of the reduced additional richness (Δr) is read from a map as a function of the burned gas temperature (Tgb).

3. Control method according to Claim 1, wherein in step c), the value of the reduced additional richness (Δr) is calculated using a controller as a function of the burned gas temperature (Tgb).

4. Control method according to the preceding claim, wherein the controller is a proportional-integral-derivative controller (PID).

5. Control method according to any of the preceding claims, wherein each liquid coolant temperature setpoint (CTI1; CTI2) is read from a predefined map.

6. Control method according to any of the preceding claims, wherein each liquid coolant temperature setpoint (CTI1; CTI2) is selected from a first set of separate values.

7. Control method according to the preceding claim, wherein the first set comprises at most five separate values.

8. Control method according to the preceding claim, wherein the first set comprises three separate values, namely 80°C, 90°C and 100°C.

9. Control method according to any of the three preceding claims, wherein when the ambient temperature Ta is greater than a predefined threshold, each liquid coolant temperature setpoint (CTI1, CTI2) is selected from a second set of values, the lowest value of this second set being greater than the lowest value of the first set.

10. Internal combustion engine (1) comprising an engine block (10), an intake line (20) for introducing fresh air into the engine block (10) and provided with a valve (24) for controlling the flow of fresh air into the engine block (10), an exhaust line (30) for discharging the burned gases from the engine block (10), a line (50) for injecting fuel into the engine block (10) and provided with at least one injector (54) for injecting fuel into the engine block (10), a coolant circuit (40) of the engine block (10) provided with a thermostat (41), **characterized in that** it comprises a computer (100) configured to implement all the steps of the control method according to any of the preceding claims and to control said control valve (24), each injector (54) and said thermostat (41) according to the setpoints of the liquid coolant temperature (CTI2) and richness (Cr2), and taking into account said additional richness (Δr).
